# EUROPÄISCHE PATENTANMELDUNG

(11) **EP 0 866 422 A2**
(43) Veröffentlichungstag der Anmeldung: **23.09.1998**
(21) Anmeldenummer: 98104372.2
(22) Anmeldetag: 11.03.1998
(51) Int. Cl.: G06K 19/077

(54) **Steckkarte für elektronische Geräte**

(30) Priorität: 13.03.1997 DE 19710514
(71) Anmelder: ITT MANUFACTURING ENTERPRISES, INC., Wilmington, Delaware 19801 (US)
(72) Erfinder: Biermann, Werner, 73650 Winterbach (DE); Learmonth, Ian Thomas, North Waltham, Basingstoke RG26 2EL (GB); Zeyfang, Jan, 71397 Leutenbach (DE)
(74) Vertreter: Dreiss, Fuhlendorf, Steimle & Becker

(57) **Zusammenfassung**

Eine Steckkarte (10) für elektronische Geräte, in etwa länglich rechteckiger, flacher Form, ist mit einem zwei halbschalenartig ausgebildete metallische Gehäuseteile (13, 14) aufweisenden Gehäuse (11), mit einer zumindest teilweise im Gehäuse (11) aufgenommenen Leiterplatte (15) und mit einem an einem Querende der Leiterplatte (15) gehaltenen Steckverbinder (20), der die Stirnseitenöffnung des Gehäuses (11) abdeckt, und mit einem oder mehreren Abschirmelementen (21, 22) innerhalb des Gehäuses (11) versehen. Dabei ist das Abschirmelement durch ein stegartiges Element (21, 22) gebildet, das zwischen der Leiterplatte (15) und dem betreffenden Gehäuseteil (13, 14) elektrisch kontaktierend angeordnet ist, wobei es sich an dem betreffenden Gehäuseteil (13, 14) und/oder der Leiterplatte (15) elastisch abstützt. Auf diese Weise ist eine Steckkarte für elektronische Geräte geschaffen, deren Abschirmelemente in einfacherer Weise ausgebildet und montierbar und insbesondere auch zum Abschirmen von Steckkartenbauteilen gegenüber Antennenbauteilen geeignet sind.

## Beschreibung

Die vorliegende Erfindung bezieht sich auf eine Steckkarte für elektronische Geräte nach dem Oberbegriff des Anspruchs 1.

Bekannte Steckkarten für elektronische Geräte sind bspw. mit einem die Steckkarte verlängernden Antennenteil und/oder auf ihrer Leiterplatte mit Oszillatoren o.dgl. versehen, jedenfalls mit elektronischen Bauelementen, gegenüber denen andere elektronische Bauelemente auf der Leiterplatte der Steckkarte einer elektromagnetischen Abschirmung bedürfen. Bei der auf der Leiterplatte befindlichen Oszillatoren o.dgl. ist es zur Abschirmung bekannt, über das elektronische Bauteil ein käfigartiges Gehäuse zu setzen. Dieses zur Leiterplatte hin offene käfigartige Gehäuse ist auf einen an der Leiterplatte lötend befestigten Halter gesteckt und muss über zusätzliche Elemente mit dem betreffenden Gehäuseteil kontaktieren. Ein derartiges käfigartiges Gehäuse ist relativ aufwendig in der Herstellung, der Montage und bzgl. des Material und ist darüberhinaus nicht zur Abschirmung von Antennenbauteilen gegenüber der übrigen Steckkarte geeignet.

Aufgabe der vorliegenden Erfindung ist es deshalb, eine Steckkarte für elektronische Geräte der eingangs genannten Art zu schaffen, deren Abschirmelemente in einfacherer Weise ausgebildet und montierbar und insbesondere auch zum Abschirmen von Steckkartenbauteilen gegenüber Antennenbauteilen geeignet sind.

Zur Lösung dieser Aufgabe sind bei einer Steckkarte für elektronsiche Geräte der eingangs genannten Art die im Anspruch 1 angegebenen Merkmale vorgesehen.

Die stegartige Ausbildung des oder der Abschirmelemente gewährleistet einen einfachen und montagefreundlichen Aufbau. Außerdem kann mit einem derartigen stegartigen Element nahezu jede beliebige zaunartige Abgrenzung eines elektronischen Bauteils gegenüber anderen erfolgen.

Gemäß einer ersten bevorzugten Ausführungsform sind die Merkmale gemäß Anspruch 2 vorgesehan. Ein solches stegartiges Element ist als eigenständiges Bauteil entsprechend handhabbar. Zweckmäßigerweise ist das stegartige Element dabei entweder gemäß den Merkmalen des Anspruchs 7 auf die Leiterplatte gesteckt oder entsprechend den Merkmalen des Anspruchs 8 auf das Gehäuseteil geklebt.

Das stegartige Element kann bspw. aus Metall sein. In vorteilhafter Ausgestaltung ist das stegartige Element gemäß den Merkmalen des Anspruchs 3 aus einem elektrisch leitenden Kunststoff. Als solches kommt gemäß den Merkmalen des Anspruchs 4 ein leitfähiges Elastomer in Frage. Dies hat gleichzeitig den Vorteil, dass es sich an der Leiterplatte und/oder dem betreffenden Gehäuseteil elastisch abstützen kann.

Vorteilhafte Ausgestaltungen der Anordnung und abschirmenden Befestigung eines derartigen stegartigen Elementes ergeben sich aus den Merkmalen eines oder mehrerer der Ansprüche 5 bis 10.

Gemäß einem zweiten bevorzugten Ausführungsbeispiel vorliegender Erfindung sind die Merkmale des Anspruchs 11 oder 12 vorgesehen. In vorteilhafter Weise sind hier die stegartigen Elemente nicht als selbsttragendes Element sondern als mit einer Nut versehene etwa U-förmige Randschicht eines die Steckkarte bspw. aussteifenden oder ausfüllenden Elements vorgesehen. Dies hat den Vorteil, dass der elektrisch leitende Kunststoff nur in relativ kleinen Mengen verwendet werden muss.

Weitere Einzelheiten der Erfindung sind der folgenden Beschreibung zu entnehmen, in der die Erfindung anhand der in der Zeichnung dargestellten Ausführungsbeispiele näher beschrieben und erläutert ist. Es zeigen:
- Figur 1: in schematischer, auseinandergezogener perspektivischer Darstellung eine Steckkarte für elektronische Geräte gemäß einem ersten Ausführungsbeispiel vorliegender Erfindung,
- Figur 2: in schematischer, teilweise auseinandergezogener perspektivischer Darstellung eine Steckkarte für elektronische Geräte gemäß einem zweiten Ausführungsbeispiel vorliegender Erfindung,
- Figur 3: einen Schnitt längs der Linie III-III der Figur 2, und
- Figur 4: einen Teilschnitt durch eine zusammengebaute Steckkarte gemäß einem weiteren Ausführungsbeispiel.

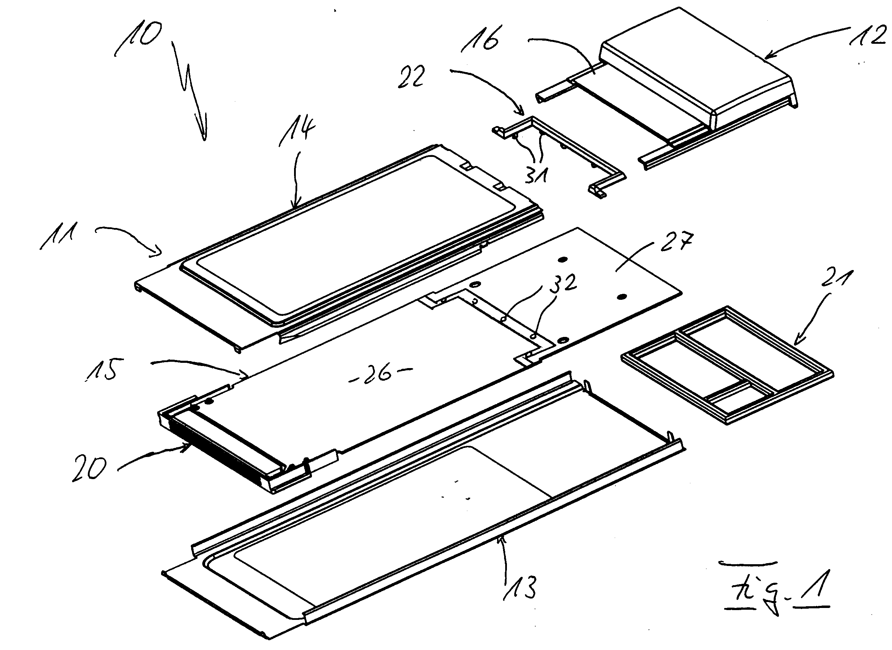

Gemäß Figur 1 besitzt die Steckkarte 10 für elektronische Geräte gemäß einem ersten bevorzugten Ausführungsbeispiel ein länglich rechteckiges und bis auf einen Antennenansatz 12 sehr flaches Gehäuse 11, das aus einem unteren Gehäuseteil 13 und einem damit verrastend verbundenen oberen Gehauseteil 14 zusammengesetzt ist. Während das untere Gehäuseteil 13 über die gesamte Länge der Steckkarte 10 verläuft, ist das obere Gehäuseteil 14 kürzer und durch ein zusätzliches Gehäuseteil 16 des Antennenansatzes 12 verlängert. Während das untere und obere Gehäuseteil 13 und 14 aus dünnem Metallblech geformt sind, ist das zusätzliche Gehäuseteil 16 des Antennenansatzes 12 aus einem elektromagnetisch nicht abschirmenden Material, wie bspw. einem geeigneten Kunststoff hergestellt. Zwischen den Gehäuseteilen 13 und 14 bzw. 16 ist die Leiterplatte 15, die in nicht dargestellter Weise mit elektronischen Bauteilen bestückt und an einem Ende mit einem bspw. 68-poligen Steckverbinder 20 versehen ist, angeordnet.

Sowohl zwischen der Leiterplatte 15 und dem oberen Gehäuseteil 14 als auch zwischen der Leiterplatte 15 und dem unteren Gehäuseteil 13 sind stegartige Abschirmelemente 21 bzw. 22 vorgesehen, die aus einem elektrisch leitenden Kunststoff hergestellt sind. Bspw. ist der elektrisch leitende Kunststoff ein Elastomer. Außerdem ist der gewählte Kunststoff bzw. das gewählte Elastomer derart, dass es elastisch zwischen Leiterplatte 15 und Gehäuseteil 13 bzw. 14 aufgenommen werden kann. Es versteht sich, dass auch andere elektrisch leitende Kunststoffe verwendet werden können.

Die Form der stegartigen Abschirmelemente 21, 22 kann unterschiedlicher Art sein. Das Abschirmelement 21 ist derart, dass es mehrere elektronische Bauteile in zaunartiger Weise vollständig und jeweils getrennt voneinander umgibt, um diese Bauteile entweder gegeneinander oder von anderen elektronischen Bauteilen elektromagnetisch abzuschirmen. Das Abschirmelement 22 zeigt eine offene zaunartige Form, um bspw. die auf dem Hauptleiterplattenbereich 26 angeordneten elektronischen Bauteile gegenüber dem Leiterplatten-Bereich 27 des Antennenansatzes 12 abzuschirmen. Die stegartigen Abschirmelemente 21, 22 sind bspw. einstückig geformt.

Die stegartigen Abschirmelemente können entweder mittels vorstehender Noppen 31 in entsprechende Bohrungen 32 auf der Leiterplatte 15 steckbar sein (Element 22) oder mit dem Gehäuseteil 13 oder 14 klebend verbunden sein (Element 21). Dabei muss das verwendete Klebemittel elektrisch leitend sein. In nicht dargestellter Weise sind die aus einem elastischen Kunststoff ausgebildeten Abschirmelemente 21, 22 derart zwischen Leiterplatte 15 und Gehäuseteil 13 bzw. 14 gebracht, dass in montiertem Zustand der Steckkarte 10 die Abschirmelemente 21 und 22 elastisch federnd zwischen diese Bauteile 13 bis 15 gebracht sind, so dass eine entsprechende elektrische Kontaktierung der elektrisch leitenden Abschirmelemente 21 und 22 mit der Leiterplatte 15 und dem Gehäuseteil 13 bzw. 14 für eine wirkungsvolle elektromagnetische Abschirmung bzw. Hochfrequenzdichtung erreicht ist.

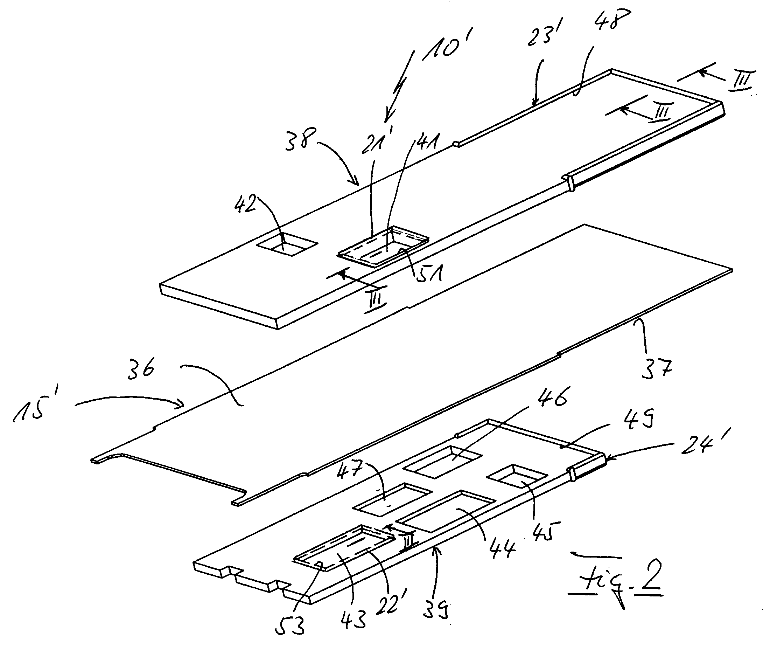

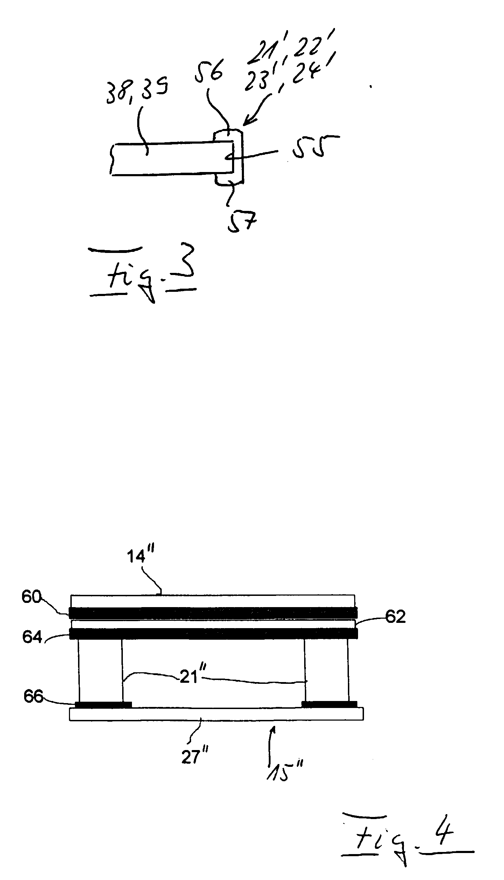

Bei der in den Figuren 2 und 3 ohne unteres und oberes Gehäuseteil dargestellten Steckkarte 10' ist auf die Oberseite und/oder Unterseite 36, 37 der Leiterplatte 15' ein plattenförmiges Füllerelement 38 bzw. 39 aufgelegt, das mit Aussparungen 41, 42 bzw. 43 bis 47 versehen ist. Diese Aussparungen 41 bis 47 dienen zur Aufnahme von auf der Leiterplatte 15' angeordneten nicht dargestellten elektronischen Bauteilen. Das Füllerelement 38, 39 trägt zum einen zur Verwindungssteifigkeit der montierten Steckkarte 10' bei und dient andererseits dazu, innerhalb einer oder mehrerer ihrer Aussparungen 41 bis 47 stegartige Abschirmelemente 21' bzw. 22' aufzunehmen bzw. randseitig in Nuten von stegartigen Abschirmelementen 21', 22' eingesteckt zu werden. Die Auswahl der betreffenden mit den Abschirmelementen versehenen Aussparungen hängt davon ab, ob und welche der von der Leiterplatte 15' vorstehenden elektronischen Bauelemente abgeschirmt werden sollen.

Gemäß Figur 3 sind die Innenränder 51 bzw. 53 der Aussparungen 41 und 43 von den in U-Form ausgebildeten, mit einer horizontalen Nut 55 versehenen stegartigen Abschirmelementen 21', 22' belegt. Dies gilt außerdem für Bereiche der endseitigen Außenränder 48 und 49 des Füllerelementes 38 bzw. 39, die mit Abschirmelementen 23', 24' belegt sind. Mit anderen Worten, die stegförmigen Abschirmelemente 21' bis 24' umfassen entsprechend Figur 3 U-förmig die betreffenden Innenränder 51 und 52 bzw. Außenränder 48 und 49 der Füllerelemente 38, 39, d.h. sie nehmen in ihrer horizontalen Nut die betreffenden Ränder auf. Die Abschirmelemente 21' bis 24' sind wie die Abschirmelemente 21 und 22 der Figur 1 aus einem elektrisch leitenden Kunststoff.

In zusammengebautem Zustand der Steckkarte 10' liegen die ober- und unterseitig des Füllerelements 38, 39 angeordneten Schenkel 56, 57 der umlaufenden stegförmigen Abschirmungselemente 21' bis 24' einerseits an der Leiterplatte 15' und andererseits am unteren bzw. oberen Gehäuseteil elektrisch leitend an. Auch hier ist das stegartige Abschirmelement 21' bis 24' elastisch federnd zwischen Leiterplatte 15' und betreffendem Gehäuseteil vorgespannt.

Bei dem in Figur 4 dargestellten Ausführungsbeispiel ist das aus einem elektrisch leitenden Kunststoff bestehende Abschirmelement 21 auf eine metallische Leiterbahn 66, bspw. aus Kupfer, elektrisch leitend aufgesetzt, wobei die auf einer Platine 27 der gedruckten Leiterplatte 15 befestigte Leiterbahn 66 mit Masse bzw. Erde verbunden ist. Die Innenseite des oberen Gehäuseteils 14'' ist entweder über einen elektrisch leitfähigen Kleber 64 unmittelbar mit der Oberseite des Abschirmelementes 21'' verbunden oder, wie in Figur 4 dargestellt ist, zunächst über einen elektrisch leitfähigen Kleber 60 mit einer zumindest im Bereich des bspw. zaunförmigen Abschirmelementes 21'' angeordneten metallischen Folie 62, vorzugsweise aus Kupfer, verbunden, welche ihrerseits dann über die Schicht aus elektrisch leitfähigem Kleber 64 mit der Oberseite des Abschirmelementes 21'' verbunden ist. Auf diese Weise ist eine Verbesserung der elektromagnetischen Abschirmung erreicht.

Bei einem nicht dargestellten Ausführungsbeispiel vorliegender Erfindung ist das Füllerelement 38 bzw. 39 durch ein Aussteifungsrahmen, der ggf. Zwischenstege aufweisen kann, ersetzt. Der Innen- und/oder Außenrand dieses Rahmens und/oder die Innen- und/oder Außenränder der Längs- und/oder Querstege des Rahmens können, wie beim vorhergehenden Ausführungsbeispiel beschrieben, ganz oder teilweise mit den U-förmigen stegartigen Abschirmelementen 21' bis 24' belegt sein.

## Patentansprüche

1. Steckkarte (10, 10') für elektronische Geräte, in etwa länglich rechteckiger, flacher Form, mit einem zwei halbschalenartig ausgebildete metallische Gehäuseteile (13, 14) aufweisenden Gehäuse (11), mit einer zumindest teilweise im Gehäuse (11) aufgenommenen Leiterplatte (15) und mit einem an einem Querende der Leiterplatte (15) gehaltenen Steckverbinder (20), der die Stirnseitenöffnung des Gehäuses (11) abdeckt, und mit einem oder mehreren Abschirmelementen (21, 22) innerhalb des Gehäuses (11), **dadurch gekennzeichnet**, dass das Abschirmelement durch ein stegartiges Element (21, 22; 21' bis 24') gebildet ist, das zwischen der Leiterplatte (15) und dem betreffenden Gehäuseteil (13, 14) elektrisch kontaktierend angeordnet ist, wobei es sich an dem betreffenden Gehäuseteil (13, 14) und/oder der Leiterplatte (15) elastisch abstützt.

2. Steckkarte nach Anspruch 1, dadurch gekennzeichnet, dass das stegartige Element (21 bis 24) auf der Leiterplatte oder dem betreffenden Gehäuseteil (13, 14) befestigt ist.

3. Steckkarte nach Anspruch 1 oder 2, dadurch gekennzeichnet, dass das stegartige Element (21 bis 24) aus einem elektrisch leitenden Kunststoff ist.

4. Steckkarte nach Anspruch 3, dadurch gekennzeichnet, dass der elektrisch leitende Kunststoff ein leitfähiges Elastomer ist.

5. Steckkarte nach mindestens einem der vorhergehenden Ansprüche, dadurch gekennzeichnet, dass das stegartige Element (21 bis 24) einen abzuschirmenden Bereich teilseitig oder allseitig einstückig umgibt.

6. Steckkarte nach mindestens einem der vorhergehenden Ansprüche, dadurch gekennzeichnet, dass das stegartige Element (21 bis 24) zwischen der Leiterplatte (15) und jedem der Gehäuseteile (13, 14) vorgesehen ist.

7. Steckkarte nach mindestens einem der Ansprüche 2 bis 6, dadurch gekennzeichnet, dass das stegartige Element (21, 22) auf die Leiterplatte (15) gesteckt ist.

8. Steckkarte nach mindestens einem der Ansprüche 2 bis 6, dadurch gekennzeichnet, dass das stegartige Element (21 bis 24) an die Innenseite des Gehäuseteils (13, 14) geklebt ist.

9. Steckkarte nach mindestens einem der Ansprüche 2 bis 6, dadurch gekennzeichnet, dass das stegartige Element (21'') auf einer geerdeten Leiterbahn (66) der Leiterplatte (15'') aufliegt und an einer an der Unterseite des betreffenden Gehäuseteils (14'') flächig angebrachten elektrisch leitfähigen Kleberschicht (60) anliegt.

10. Steckkarte nach Anspruch 9, dadurch gekennzeichnet, dass zwischen der Unterseite des Gehäuseteils (14'') und der Oberseite des Abschirmelementes (21'') eine flächige Metallfolie (62) vorgesehen ist.

11. Steckkarte nach mindestens einem der Ansprüche 1, 3 bis 6, dadurch gekennzeichnet, dass zwischen der Leiterplatte (15) und dem Gehäuseteil (13, 14) ein Rahmenbauteil angeordnet ist, dessen Außen- und/oder Innenrand zumindest bereichsweise in eine horizontale Nut des stegartigen Elementes (21' bis 24') eingreift.

12. Steckkarte nach mindestens einem der Ansprüche 1, 3 bis 6, dadurch gekennzeichnet, dass zwischen der Leiterplatte (15') und dem Gehäuseteil ein Plattenelement (38, 39), das mit einer oder mehreren Aussparungen (41 bis 47) versehen ist, angeordnet ist und dass zumindest Bereiche der Innenränder der Aussparungen (41 bis 45) und/oder der Außenränder (48, 49) des Plattenelementes in eine horizontale Nut (55) des mit dem stegartigen Elementes (21' bis 24') eingreifen.
